# EUROPEAN PATENT SPECIFICATION

(11) **EP 3 272 652 B1**
(45) Date of publication and mention of the grant of the patent: **23.08.2023**
(21) Application number: 17749346.7
(22) Date of filing: 26.05.2017
(51) Int. Cl.: B64C 39/02, B64D 47/08, B64D 35/02, B64C 27/12, B64C 27/08, B64U 10/13, B64U 30/20, B64U 50/19, B64U 101/30

(54) **UNMANNED AERIAL VEHICLE**
UNBEMANNTES LUFTFAHRZEUG
VÉHICULE AÉRIEN SANS PILOTE

(30) Priority: 27.05.2016 KR 20160065571; 31.12.2016 US 201662441169 P; 24.05.2017 KR 20170064384
(43) Date of publication of application: 24.01.2018
(73) Proprietor: Uvify Co., Ltd., Gwanak-gu, Seoul 08797 (KR)
(72) Inventor: LIM, Hyon, Seoul 08797 (KR)
(74) Representative: M. Zardi & Co S.A.
(86) International application number: PCT/KR2017/005512
(87) International publication number: WO 2017/204592

(56) References cited:
- WO-A1-2014/059549
- WO-A2-2012/064160
- CN-U- 204 223 178
- CN-U- 204 979 215
- JP-A- 2016 037 108
- KR-A- 20130 109 986
- KR-B1- 101 564 380
- US-A1- 2014 037 278
- US-A1- 2014 061 376
- US-A1- 2015 158 392
- US-A1- 2016 032 895
- US-A1- 2016 144 954
- Dji: "PHANTOM 3 Quick Start Guide", , 19 April 2016 (2016-04-19), XP055465507, Retrieved from the Internet: URL:http://dl.djicdn.com/downloads/phantom _3_standard/en/En_Phantom_3_Standard_Quick _Start_Guide_0419.pdf [retrieved on 2018-04-09]

## Description

### TECHNICAL FIELD

The present invention relates to an unmanned aerial vehicle, and more particularly, to an unmanned aerial vehicle having a detachable arm.

### BACKGROUND ART

Unmanned aerial vehicles (UAVs) that are called drones mean flying objects manufactured to fly by radio wave induction without a pilot on board and to carry out a designated mission. Various equipment such as optical devices, infrared devices, or radar sensors according to the fields of applications may be mounted on the UAV to carry out missions such as surveillance, reconnaissance, communication/information broadcasting, etc.

An unmanned aerial vehicle may generally include an arm part where a propeller is installed and a body part. The propeller or the arm part may be easily damaged during the flight due to the characteristics of the arm part where the propeller is installed.

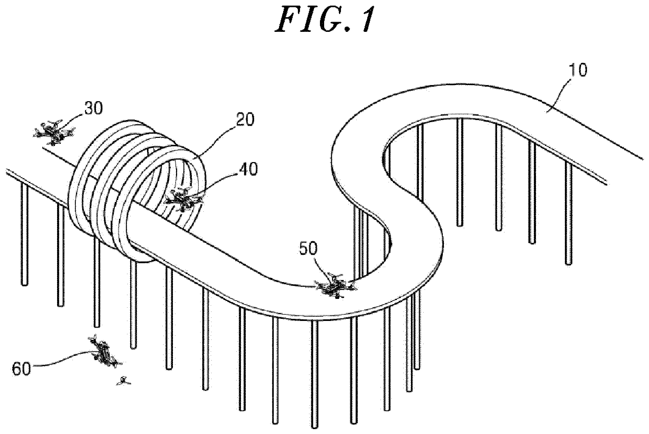

Recently, a drone racing game for racing with a plurality of drones draws attention. Referring to FIG. 1, in a drone racing game, a racing rail 10 is installed or a preset racing course is prepared. After various obstacles 20 are installed, a plurality of racing drones 30, 40, 50, and 60 participating in the game fly along the racing rail 10 by safely passing through the obstacles 20. Since the racing drones 30, 40, 50, and 60 need to not only fly at fast speed along the racing rail 10, but also rapidly pass through the obstacles 20 installed everywhere, the racing drones 30, 40, 50, and 60 may be easily damaged or broken by bumping the obstacles 20.

For drones, in particular, racing drones, various variables may causes damage during racing, repairing damaged drones may not be easy even when it is a minor damage, and much time is generally spent for maintenance. CN 204 223 178 U discloses a foldable unmanned aerial vehicle which comprises a central rack, engine arms, foot racks, propellers, motors and batteries.

### DETAILED DESCRIPTION OF THE INVENTIVE CONCEPT

### TECHNICAL PROBLEM

The present inventive concept provides an unmanned aerial vehicle having detachable constituent elements that are easy to replace when damaged.

### TECHNICAL SOLUTION

According to an aspect of the present inventive concept, there is provided a unmanned aerial vehicle according to appended claim 1.

### ADVANTAGEOUS EFFECTS

Even when a rotary wing, a battery, a motor, or an arm is damaged, a damaged part may be easily replaced without disassembly or soldering.

In unmanned aerial vehicles according to the appended claims, since the arm unit is configured to be detachable from the main body, when the arm unit is damaged or broken due to falling or an external shock, the arm unit may be replaced or may be replaced with an upgraded arm unit later.

In unmanned aerial vehicles according to the appended claims, since a battery unit is provided to be detachable from the main body, a clamping structure is provided in each of the main body and the battery unit to clamp each other, the battery unit may be firmly clamped to the main body and may be replaced smoothly, easily, and rapidly.

In unmanned aerial vehicles according to the appended claims, when the main body except for the arm unit and the battery unit is damaged or broken, or is to be upgraded, only the main body may be replaced.

### DESCRIPTION OF THE DRAWINGS

FIG. 1 illustrates an example of a racing drone game installation structure.
FIG. 2 is a plan view of an unmanned aerial vehicle according to an embodiment.
FIG. 3 is a perspective view of an unmanned aerial vehicle according to an embodiment.
FIG. 4 is an exploded view of an arm unit according to an embodiment.
FIG. 5A is an exploded view of a main body according to an embodiment.
FIG. 5B illustrates a rear surface of a main control member illustrated in FIG. 5A.
FIG. 6 is a reference view for describing coupling of the arm unit and the main body according to an embodiment.
FIG. 7 is a plan view of the arm unit according to an embodiment.
FIG. 8 is a bottom view of an unmanned aerial vehicle according to an embodiment.
FIG. 9A is an explode view of an unmanned aerial vehicle according to an embodiment.
FIG. 9B illustrates an example in which an airplane wing is coupled to the main body of an unmanned aerial vehicle, which does not fall under the scope of protection but was provided for illustrative purpose.
FIG. 10 illustrates a coupling state of the battery unit in an unmanned aerial vehicle according to an embodiment.
FIG. 11 illustrates a decoupled state of the battery unit in an unmanned aerial vehicle according to an embodiment.
FIG. 12 illustrates a structure of the battery unit according to an embodiment.
FIG. 13 illustrates a battery charger according to an embodiment.
FIG. 14 illustrates a camera installation member provided in the main body of the unmanned aerial vehicle according to an embodiment.
FIG. 15 illustrates a structure of effectively cooling heat of a battery of the unmanned aerial vehicle according to an embodiment.
FIG. 16 illustrates a structure of the battery unit and the main body capable of effectively cooling heat of a battery of the unmanned aerial vehicle according to an embodiment.
FIG. 17 illustrates a battery detachable bracket having a ventilation manifold installed thereon.
FIG. 18 illustrates a rear side of the main body of the unmanned aerial vehicle to which the battery unit is coupled.

### MODE OF THE INVENTIVE CONCEPT

Hereinafter, exemplary embodiments according to the present inventive concept are described in detail with reference to the accompanying drawings. Furthermore, a method of configuring and using an electronic apparatus according to an embodiment of the present inventive concept is described in detail with reference to the accompanying drawings. Throughout the detailed description section of the present inventive concept, like reference numerals denote like constituent elements.

Terms such as "first" and "second" are used herein merely to describe a variety of constituent elements, but the constituent elements are not limited by the terms. Such terms are used only for the purpose of distinguishing one constituent element from another constituent element. For example, without departing from the right scope of the present inventive concept, a first constituent element may be referred to as a second constituent element, and vice versa.

The term "and/or" includes any and all combinations of one or more of the associated listed items.

The terminology used herein is for the purpose of describing particular embodiments only and is not intended to limit embodiments. As used herein, the singular forms "a," "an" and "the" are intended to include the plural forms as well, unless the context clearly indicates otherwise. It will be further understood that terms "comprises" and/or "comprising" when used in this specification, specify the presence of stated features, integers, steps, operations, elements, and/or components, but do not preclude the presence or addition of one or more other features, integers, steps, operations, elements, components, and/or groups thereof.

Embodiments are described with reference to the accompanying drawings.

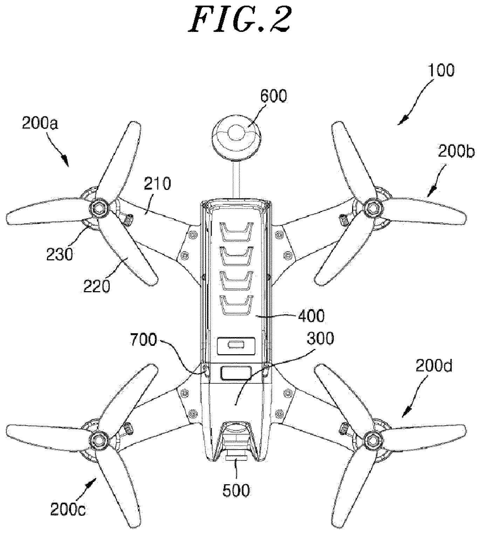

FIG. 2 is a plan view of an unmanned aerial vehicle 100 according to an embodiment.

Referring to FIG. 2, the unmanned aerial vehicle 100 according to an embodiment includes a main body 300, a plurality of arm units 200 detachably coupled to the main body 300, and a battery unit 400 detachably coupled to the main body 300.

The main body 300 serves as a main frame on which constituent elements of the unmanned aerial vehicle 100 are fixedly installed. The main body 300 may have any shape if it enables easy and firm installation of the constituent elements.

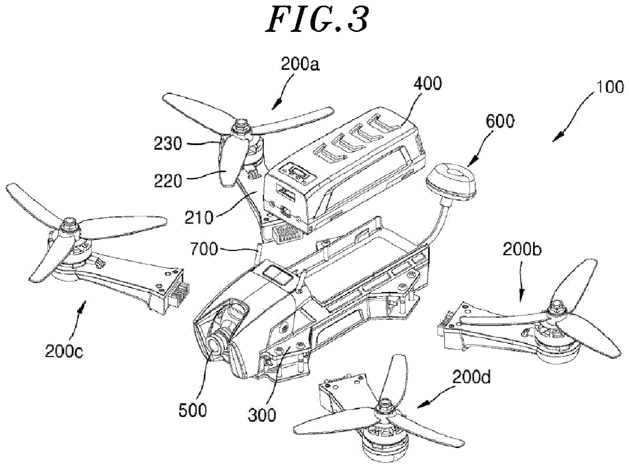

A camera unit 500 and a lighting unit may be installed in a front part of the main body 300, and an antenna 600 may be installed in a rear part thereof. The camera unit 500 may capture images during the flight of the unmanned aerial vehicle 100. The antenna 600 installed at the rear part may transmit signals of the images captured by the camera 500 to a remote control device. Referring to FIG. 3, another antenna 700 may be further installed in a middle part of the main body 300, and the antenna 700 may be used for transceiving control signals with respect to the remote control device.

The arm units 200 may include arm units 200a to 200d. Each of the arm units 200 includes an arm main body 210, a rotary wing 220, and a motor 230.

The battery unit 400 is detachably coupled to the main body 300 to be exposed to the outside.

FIG. 3 is a perspective view of the unmanned aerial vehicle 100 according to an embodiment.

Referring to FIG. 3, in the unmanned aerial vehicle 100 according to an embodiment, since the arm units 200 and the battery unit 400 are all detachably coupled to the main body 300, the unmanned aerial vehicle 100 is separated into the main body 300, the battery unit 400, and the arm units 200.

As such, in the unmanned aerial vehicle 100 according to the present embodiment, each of the arm units 200 is configured to be detachable from the main body 300, when the arm unit 200 is damaged or broken due to falling or an external shock, only the arm unit 200 needs to be replaced and may be also replaced with an upgraded arm unit 200 later.

Furthermore, since the unmanned aerial vehicle 100 according to an embodiment includes the battery unit 400 configured to be detachable from the main body 300, and a clamping structure to clamp the main body 300 and the battery unit 400 to each other, the battery unit 400 is firmly clamped to the main body 300, and the battery unit 400 may be smoothly, easily, and rapidly replaced.

Furthermore, in the unmanned aerial vehicle 100 according to an embodiment, when the main body 300 is damaged or broken or needs to be upgraded, only the main body 300 may be replaced.

Although the configuration of the unmanned aerial vehicle 100 according to an embodiment may be applied to unmanned aerial vehicles for any purpose, the configuration may be particularly effective on racing drones in which constituent elements thereof are relatively easily damaged.

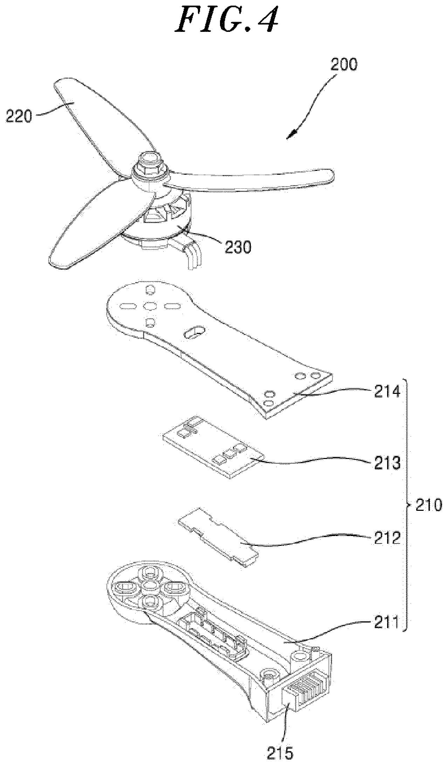

FIG. 4 is an exploded view of the arm unit 200 according to an embodiment.

Referring to FIG. 4, the arm unit 200 includes the arm main body 210, the motor 230, and the rotary wing 220.

The arm main body 210 is a bar-shaped member having a certain length. The motor 230 is installed at an end portion of the arm main body 210. The rotary wing 220 is installed at the motor 230 and rotated thereby.

However, the shape of the arm main body 210 is not limited to the above bar shape, and may have any shape if the arm main body 210 can function as an arm.

The arm main body 210 may include an arm upper cover 214 and an arm lower cover 211 coupled to each other between an LED PCB 212 and a motor control member 213.

The LED PCB 212 may include a circuit for controlling an LED installed at the arm unit 200.

The motor control member 213 is installed between the arm upper cover 214 and the arm lower cover 211, and includes a circuit for controlling a speed of the motor 230.

A connector 215 having a plurality of pins for transceiving signals with respect to the arm main body 210 and transferring signals to the motor control member 213 is installed at one end of the arm lower cover 211.

According to an embodiment, the arm upper cover 214 may protect the motor control member 213 and enable the arm main body 210 to be maintained in a structurally firm state.

According to an embodiment, the arm upper cover 214 is formed of a material having high heat conductivity and may have a heat dissipation function to cool the motor control member 213. When the unmanned aerial vehicle 100 flies, the motor 230 receives electric energy from the motor control member 213 and performs a rotational motion, during which heat is generated from the motor control member 213. If the generated heat is not discharged, operational performance of the motor control member 213 may be deteriorated. Thus, in order to discharge the heat, a hole is formed in a case around a motor control member in an unmanned aerial vehicle according to the related art. However, there is a problem in that foreign materials come into a drone through the hole. According to the present embodiment, since the arm upper cover 214 of the unmanned aerial vehicle 100 formed of a material having high heat conductivity may serve as a heat dissipation plate, the heat generated from the motor control member 213 may be discharged to the outside without having any exposed hole.

During the flight of the unmanned aerial vehicle 100, as the motor control member 213 is continuously cooled by an air flow generated by the rotary wing 220, the unmanned aerial vehicle 100 may have an effective structure to discharge the heat of the motor control member 213.

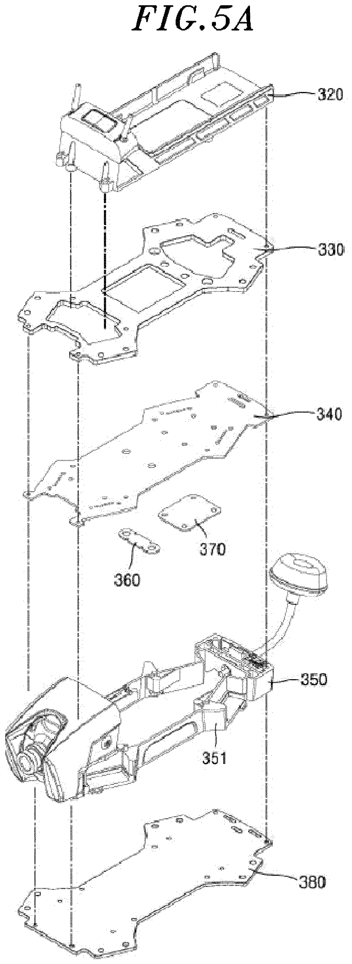

FIG. 5A is an exploded view of the main body 340 according to an embodiment.

Referring to FIG. 5A, the main body 300 may include a battery detachable bracket 320, a carbon plate 330, a main control member 340, an IMU sensor board 360, a central operating board 370, a main body frame 350, and a main body lower carbon cover 380.

The battery detachable bracket 320 is to detachably fix the battery unit 400 to the carbon plate 330 of the main body 300, and is installed above the carbon plate 330.

The carbon plate 330 may perform a heat dissipation function to cool the battery unit 400

The main control member 340 is firmly installed on an upper portion of lower frame 350. The main control member 340 may include a circuit unit for receiving signals transmitted from the remote control device and controlling power of the battery unit 400, thereby controlling the flight of the unmanned aerial vehicle 100. Furthermore, the main control member 340 includes a receptacle R located at an edge part of the main control member 340. When the arm unit 200 is connected to the main body 300, a plug terminal P of the arm unit 200 is inserted into the receptacle R.

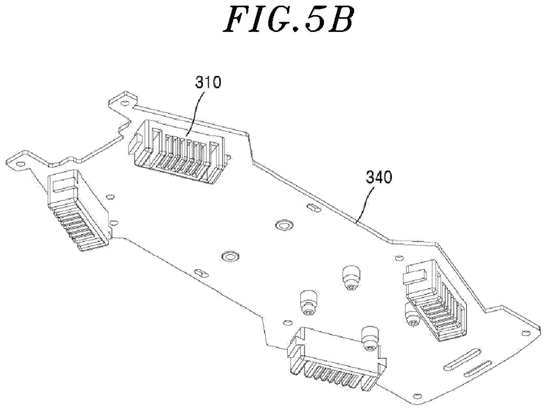

FIG. 5B illustrates a rear surface of the main control member 340 illustrated in FIG. 5A. Referring to FIG. 5B, the receptacle 310 into which the plug terminal P of the arm unit 200 is inserted is provided at the edge part of the main control member 340.

In the unmanned aerial vehicle 100, when the motor 230 rotates the rotary wing 220 at high speed, vibration may be generated in the unmanned aerial vehicle 100. When the IMU sensor board 360 is not independently anti-vibration processed, a sensor generates a signal including a vibration component. When a gain value of a software filter is increased to remove the vibration, time delay is essentially generated in the sensor signal and the unmanned aerial vehicle 100 may not be able to perform enhanced flight at an accurate time. When a sensor board that is independently anti-vibration processed is used, vibration transferred to the sensor is physically reduced and the time delay of the sensor signal is reduced due to the use of software having a low filter gain. Accordingly, instant enhanced flight of the unmanned aerial vehicle 100 is possible.

The main body frame 350 is a frame to accommodate and support the main control member 340, and may further include a support side wall 351 to support the receptacle 310.

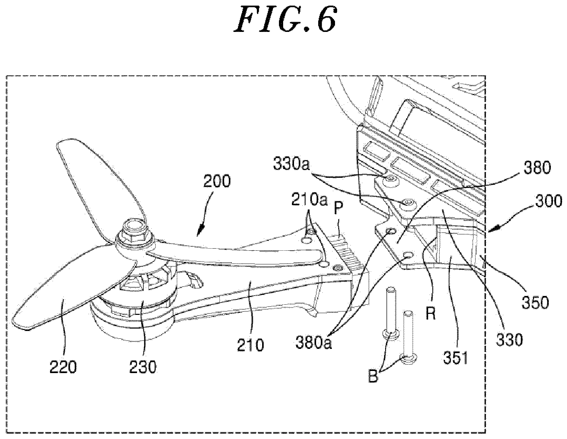

FIG. 6 is a reference view for describing coupling of the arm unit 200 and the main body 300 according to an embodiment.

In the arm unit 200 configured as above, an opposite end portion of the arm unit 200 is configured to be detachable from the main body 300.

In detail, the arm main body 210 of the arm unit 200 is configured to be detachable from the main control member 340 of the main body 300. Referring to FIG. 5A, the main control member 340 is integrally coupled to the carbon plate 330 on a lower portion of the carbon plate 330. When the arm main body 210 is connected to the main control member 340, the plug terminal P of the arm main body 210 is inserted into the receptacle(R) 310 of the main control member 340. When the arm main body 210 is disassembled from the main control member 340, the plug terminal P of the arm main body 210 is detached from the receptacle(R) 310 of the main control member 340. Furthermore, during the insertion, to allow the arm main body 210 to be firmly connected and fixed to the main body 300, after the plug terminal P of the arm main body 210 is inserted into the receptacle(R) 310 of the main control member 340, additional fixing using a coupling bolt B is performed therebetween.

For example, from under the main body lower carbon cover 380 coupled to a lower portion of the main body frame 350, the coupling bolt B passes through a first coupling hole 380a of the main body lower carbon cover 380 and a second coupling hole 210a of the arm main body 210, and then screw-coupled to a nut portion 330a of the carbon plate 330.

Furthermore, the support side wall 351 that firmly supports both side portions of the receptacle R is formed on the main body frame 350. The support side wall 351 may prevent the plug terminal P and the receptacle R from being damaged or deformed by an external force or shock after the plug terminal P is inserted into the receptacle R. Accordingly, when the arm main body 210 is mounted on the main body 300, a firm connection and fixing state may be obtained therebetween.

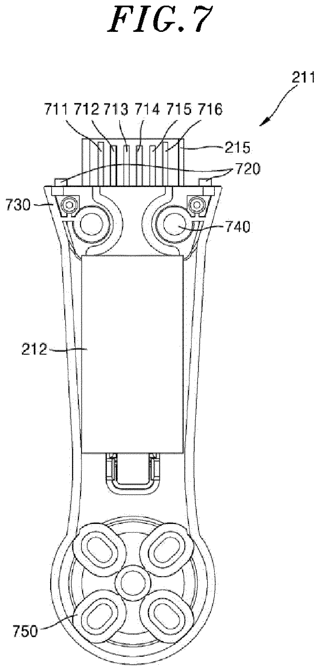

FIG. 7 is a plan view of the arm lower cover 211 according to an embodiment.

Referring to FIG. 7, the arm lower cover 211 includes, at one end thereof, the connector 215 for the coupling to the receptacle R provided at the main body 300. The arm lower cover 211 may include a PCB holding bolt 720, a plastic case 730, and an arm holding nut 740. The motor 230 may be installed at an upper portion of one end 750 of the arm lower cover 211.

The plug terminal P is a connection portion of the main body 300 and the arm unit 200 detachable from the main body 300, and is located at one end portion of the arm unit 200. The plug terminal P may be configured by, for example, six pins 711, 712, 713, 714, 715, and 716. Among the six pins, four pins may be used for power and the other two pins may be used for signal transceiving.

The two pins for signal transceiving may be used for, for example, (LED color control and rotor speed control), (serial communication transmission and serial communication receiving) for serial communication, (rotor speed control and rotor speed control) for robust signal transceiving, or (CAN High and CAN Low) for CAN communication.

As such, as the motor control member 212 is arranged at the arm unit 200, a motor line connecting the motor control member 212 and the motor 230 installed on an upper portion of the one end 750 of the arm lower cover 211 is shortened so that the weight of the arm unit 200 may be reduced.

Furthermore, as the motor control member 212 is arranged at the arm unit 200 in a distributed manner, when the motor control member 212 is broken, the unmanned aerial vehicle 100 may be easily repaired by replacing only the arm unit 200 including the broken motor control member 212. When the motor control member 212 is installed at the main body 300 and the motor control member 212 is broken, the entire main body 300 needs to be replaced.

According to an embodiment, the arm unit 200 may include the motor control member 212 therein. As such, when the motor control member 212 is included in the arm unit 200, not only a motor control signal, but also control of an LED indicating a state of the unmanned aerial vehicle 100 may be controlled by a corresponding signal. By doing so, flexibility and robustness of the unmanned aerial vehicle 100 may be improved. Since the signals transferred through the connector 215 include signals not only for the control of the motor 230 of the unmanned aerial vehicle 100, but also for the control of a color of the LED, a flexible configuration is possible.

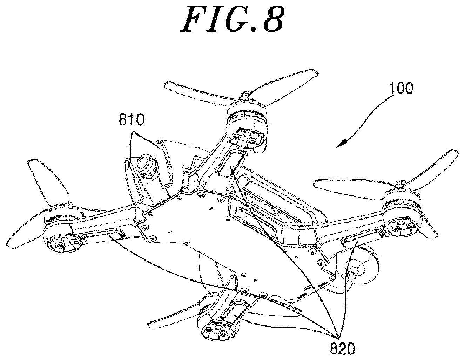

FIG. 8 is a bottom view of the unmanned aerial vehicle 100 according to an embodiment.

The unmanned aerial vehicle 100 according to an embodiment may include a plurality of lighting units at a front surface of the main body 300, the arm unit 200, and a rear surface of the main body 300.

Referring to FIG. 8, the unmanned aerial vehicle 100 according to an embodiment may include a front LED 810 at the front surface of the main body 300, an arm LED 820 at the lower surface of the arm unit 200, and a back LED at the rear surface of the main body 300.

As such, the LEDs provided in the unmanned aerial vehicle 100 may indicate various states of the unmanned aerial vehicle 100.

According to an embodiment, the LEDs provided in the unmanned aerial vehicle 100 may emit light a color designated by a user to distinguish one airplane from another when a plurality of airplanes fly at the same time.

According to an embodiment, the LEDs provided in the unmanned aerial vehicle 100 may indicate a stop state or a rotation state of the motor 230.

According to an embodiment, the LEDs provided in the unmanned aerial vehicle 100 may indicate a low voltage state of a battery. For example, during the flight of the unmanned aerial vehicle 100, when a voltage of a battery is lowered so as not to maintain the flight, the LEDs may be implemented to flicker for warning.

According to an embodiment, the LEDs provided in the unmanned aerial vehicle 100 may be used to warn abnormality of an airframe of the unmanned aerial vehicle 100. For example, when no control signal is received from a remote controller or the ground is not flat for taking off, the LEDs may indicate warning by using flickering and colors of the LEDs.

According to an embodiment, the LEDs provided in the unmanned aerial vehicle 100 may indicate a remote control device connection mode. For example, when the unmanned aerial vehicle 100 and the remote control device are connected to each other, the LEDs flickering in a particular color may indicate that the unmanned aerial vehicle 100 is in a connection mode.

According to an embodiment, the LEDs provided in the unmanned aerial vehicle 100 may be implemented to indicate different states or different warnings according to the installation positions of the respective LEDs.

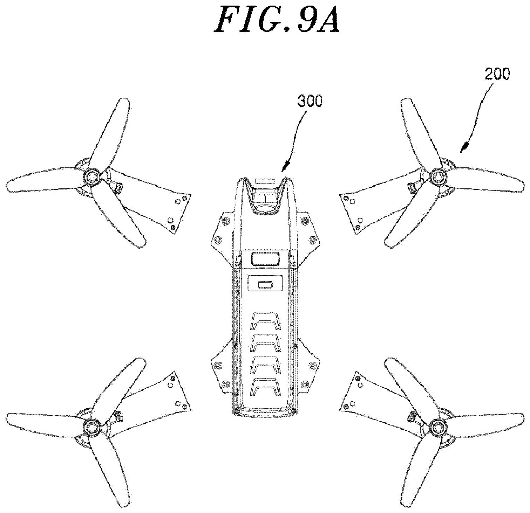

FIG. 9A is an explode view of the unmanned aerial vehicle 100 according to an embodiment.

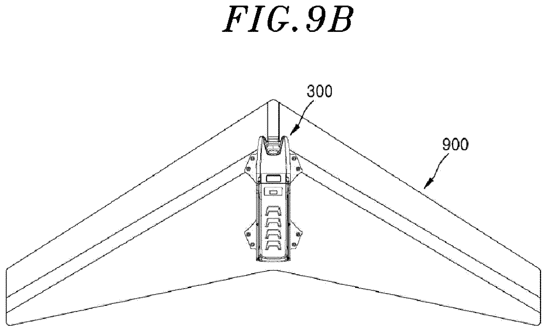

FIG. 9B illustrates an example in which an airplane wing is coupled to the main body 300 of the unmanned aerial vehicle 100.

As illustrated in FIG. 9A, in the unmanned aerial vehicle 100 according to the present embodiment, since the main body 300 and the arm unit 200 are configured to be detachable, the unmanned aerial vehicle 100 according to an embodiment may be easily converted to an unmanned aerial vehicle having an airplane shape, which is not covered by the appended claims, by installing a wing type airframe 900 in an airplane shape having a wing, instead of installing the arm unit 200. The wing type airframe 900 may have a shape to be insertion coupled to the main body 300, and may have a structure to be operated by receiving power and a control signal from the main body 300 of the unmanned aerial vehicle 100.

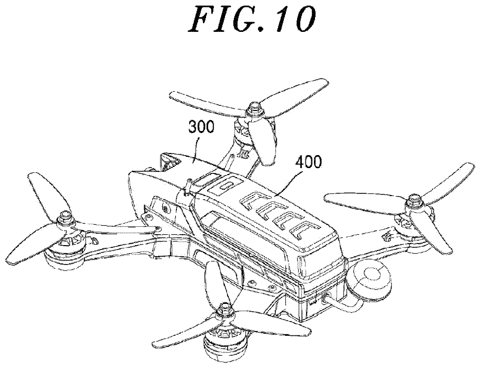

FIG. 10 illustrates a coupling state of the battery unit 400 to the main body 300 in the unmanned aerial vehicle 100 according to an embodiment.

The battery unit 400 is configured to be detachable from the main body 300. A clamping structure is provided in each of the main body 300 and the battery unit 400 to clamp each other.

As illustrated in FIG. 10, the battery unit 400 is configured to be exposed to the outside while the battery unit 400 is coupled to the main body 300. Accordingly, since the battery unit 400 flies by being exposed to the outside without being covered by another cover, heat generated due to the operation of the battery may be effectively cooled in the unmanned aerial vehicle 100 according to an embodiment.

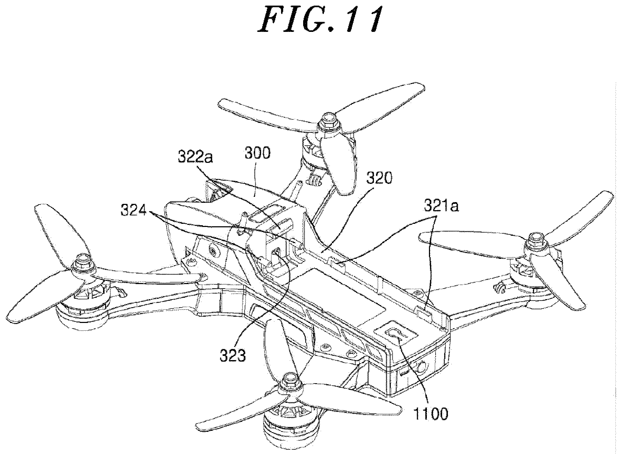

FIG. 11 illustrates a decoupled state of the battery unit 400 in the unmanned aerial vehicle 100 according to an embodiment.

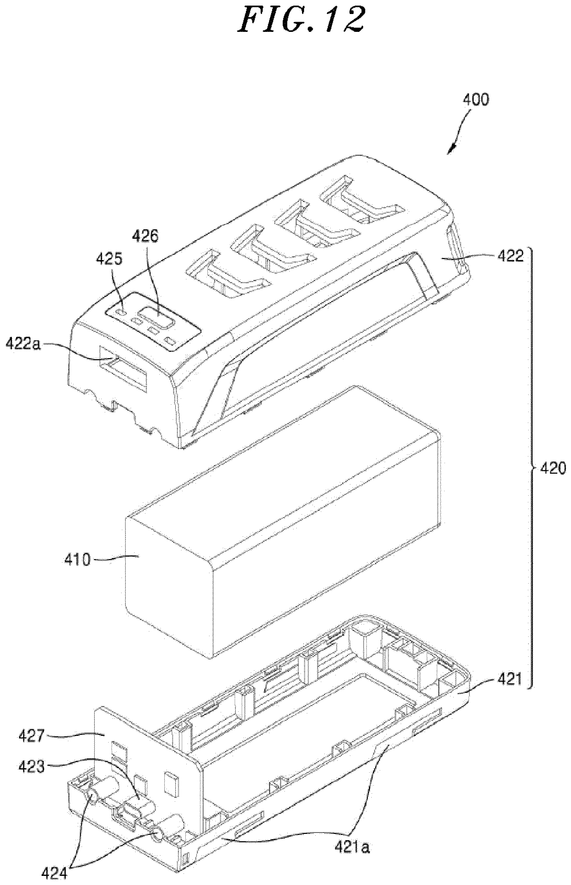

FIG. 12 illustrates a structure of the battery unit 400 according to an embodiment.

In the following description, a structure in which the battery unit 400 is detachable from the main body 300 is described with reference to FIGS. 11 and 12.

Referring to FIG. 12, the battery unit 400 includes a battery 410 and a battery case 420.

The battery case 420 is designed to have a battery expansion allowance space in a side portion or an upper portion thereof, considering a phenomenon that the battery 410 expands during the operation of the unmanned aerial vehicle 100. Furthermore, since the battery unit 400 that generates heat during the operation of the unmanned aerial vehicle 100 is located outside the unmanned aerial vehicle 100 by being clamped thereto, during the flight of the unmanned aerial vehicle 100, the battery unit 400 is naturally cooled down by an outside air flow. The battery case 420 may have any shape if it is aerodynamically efficient and aesthetic in terms of design.

The battery case 420 may include a case housing 422 and a case bottom 421.

A horizontal clamping slot 422a may be formed in the case housing 422.

A vertical clamping slot 421a may be formed in the case bottom 421. Furthermore, a battery protection board 427 for electrically protecting the battery 410 in the battery unit 400 from being damaged during the use of the battery unit 400 may be installed on the case bottom 421. The battery protection board 427 may recognize a state of the battery 410 in real time and transmit information about the state of the battery 410 to the unmanned aerial vehicle 100 via a battery communication port 423.

A vertical clamping bar 321a and a horizontal clamping bar 322a may be formed corresponding to the above-described slots on the battery detachable bracket 320 in the main body 300.

First, a vertical clamping structure of the battery case 420 where the battery 410 is accommodated is described below.

The vertical clamping slot 421a of the case bottom 421 is formed at each of opposite corner portions of a lower portion of the case bottom 421, and has a shape extending upward and then bent backward, viewed from a lateral side, as illustrated in FIG. 12. The vertical clamping bar 321a of the battery detachable bracket 320 has a shape extending upward and then bent backward, viewed from a lateral side, as illustrated in FIG. 11. Accordingly, as the battery case 420 including the battery 410 is placed in the battery detachable bracket 320, the vertical clamping bar 321a of the battery detachable bracket 320 is inserted into the vertical clamping slot 421a of the case bottom 421. As the battery case 420 is moved forward, the vertical clamping bar 321a is moved relatively backward in the vertical clamping slot 421a. Accordingly, an arrangement structure is established, in which the vertical clamping bar 321a is prevented from moving vertically in the vertical clamping slot 421a. Accordingly, the battery case 420 that accommodates the battery 410 is in a clamping state in which the battery case 420 is placed in the battery detachable bracket 320 and a vertical movement of the battery case 420 is restricted therein.

A horizontal clamping structure of the battery case 420 that accommodates the battery 410 is described below.

The horizontal clamping slot 422a is formed in the case housing 422, as illustrated in FIG. 12. A hook step is formed on the horizontal clamping bar 322a of the battery detachable bracket 320, as illustrated in FIG. 11. An end portion of the hook step protrudes in a taper shape.

Accordingly, as the battery case 420 including the battery 410 is accommodated in battery detachable bracket 320 and moved forward, the hook step of the horizontal clamping bar 322a of the battery detachable bracket 320 is slidably inserted into the horizontal clamping slot 422a of the case housing 422 to be led into the horizontal clamping slot 422a. Then, as the hook step is lifted up and caught, an arrangement structure is established, in which the horizontal clamping bar 322a is prevented from moving backward in the horizontal clamping slot 422a. Accordingly, the battery case 420 that accommodates the battery 410 is in a clamping state in which the battery case 420 is placed in the battery detachable bracket 320 and is prevented from horizontally moving.

Reversely, to remove the battery case 420 from the battery detachable bracket 320, the horizontal clamping bar 322a is pressed to lower the hook step and then the battery case 420 is moved backward. As such, when the battery case 420 is moved backward, the vertical clamping bar 321a is located at a position where the vertical movement of the vertical clamping bar 321a is not restricted in the vertical clamping slot 421a, and finally, the battery case 420 is moved upward so that the removal of the battery case 420 is completed.

Due to the above-described vertical clamping structure and horizontal clamping structure, the battery unit 400 may be firmly clamped to the main body 300 and the battery unit 400 may be easily and rapidly replaced.

Furthermore, in the clamping state in which the battery case 420 that accommodates the battery 410 is placed in the battery detachable bracket 320, a power connection terminal 324 that is connected to the main control member 340 and passes through the battery detachable bracket 320 may be inserted into and connected to a power connection portion 424 of the battery 410 that is exposed as a part of the case housing 422 is open. Furthermore, a battery communication port 323 that is connected to the main control member 340 and passes through the battery detachable bracket 320 may be connected to the battery communication port 423 of the battery 410 that is exposed as a part of the battery case 420 is open.

Referring to FIG. 11, the unmanned aerial vehicle 100 according to an embodiment may include an input button 1100 that receives a user input to pair a remote control device for controlling the unmanned aerial vehicle 100 and the unmanned aerial vehicle 100 that receives a control command. The input button 1100 may be installed at a part of the main body 300 that is not exposed to the outside when the battery unit 400 is installed on the main body 300, for the safety of users. In other words, a user may press the input button 110 only when the battery unit 400 is not installed at the main body 300.

Accordingly, the motor 230 may be structurally prevented from rotating due to an incorrect control command that may be generated during the connection between the remote control device and the unmanned aerial vehicle 100. Furthermore, according to another embodiment, when no battery is installed in the unmanned aerial vehicle 100, power for electronic circuit parts, except the motor 230, may be supplied through a USB, and various parameters of the unmanned aerial vehicle 100 may be controlled via USB power.

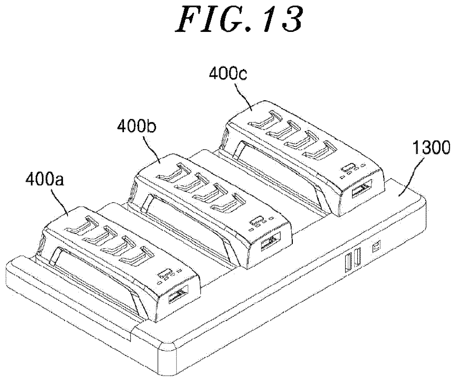

FIG. 13 illustrates a battery charger 1300 according to an embodiment.

Referring to FIG. 13, the battery charger 1300 may charge a plurality of battery units 400a, 400b, and 400c. Although in FIG. 13 the battery charger 1300 is configured to charge three batteries, the present disclosure is not limited thereto and the battery charger 1300 may be configured to charge one or more batteries.

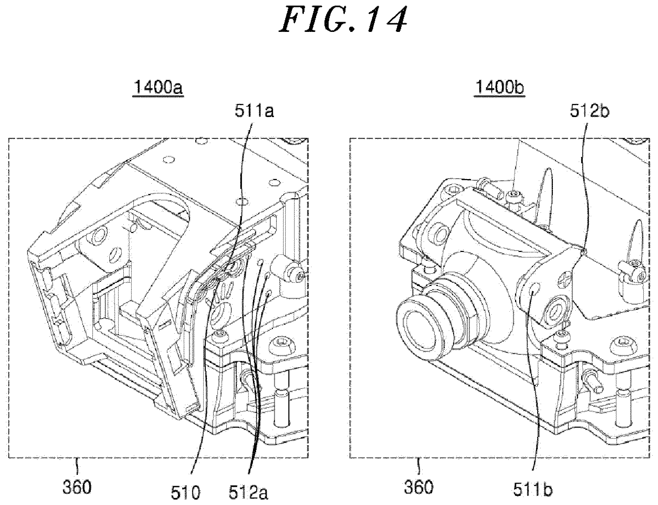

FIG. 14 illustrates a camera installation member provided in the main body 300 of the unmanned aerial vehicle 100 according to an embodiment.

Referring to FIG. 14, an angle adjustment member 360 may adjust an angle of the camera unit 500 installed in the front surface of the main body 300 and thus a user may easily change the angle of the camera unit 500 by using screw-shaped adjustment portions 511a and 511b and latch-shaped adjustment portions 512a and 512b.

The latch-shaped adjustment portions 512a and 512b may support the camera unit 500 not to move at a preset angle of the camera unit 500, and the user may firmly fix the camera unit 500 by using the screw-shaped adjustment portions 511a and 511b. In other words, the user may locate the latch-shaped adjustment portion 512b at any one of a plurality of holes that is the latch-shaped adjustment portion 512a, and may screw-couple the screw-shaped adjustment portion 511b at the screw-shaped adjustment portion 511a. As such, since the angle of the camera unit 500 is mechanically fixed by the screw-shaped adjustment portions 511a and 511b, the angle of the camera unit 500 is not changed by an external shock.

The unmanned aerial vehicle 100 according to an embodiment may have a structure to effectively cool the heat of the battery 410.

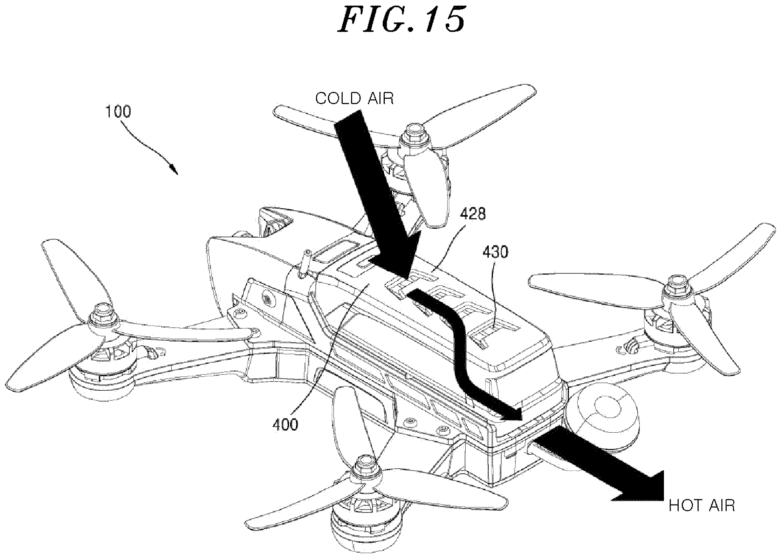

FIG. 15 illustrates a structure of effectively cooling the heat of the battery 410 of the unmanned aerial vehicle 100 according to an embodiment.

Referring to FIG. 15, during the flight of the unmanned aerial vehicle 100 according to an embodiment, cold air coming from the front side of the unmanned aerial vehicle 100 may flow into the inside of the battery unit 400 through an air inlet hole 428 provided in the battery unit 400 and pass through a ventilation slit 430 provided in the battery unit 400, thereby absorbing the heat radiated from the battery 410.

The hot air due to the absorption of the heat radiated from the battery 410 may be discharged to the outside of the unmanned aerial vehicle 100 though a ventilation manifold provided in the main body 300. As such, the heat problem of the battery 410 of the unmanned aerial vehicle 100 may be effectively solved by the above-described structure in which the battery 410 is cooled by using the cold air flowing in from the outside of the battery unit 400 and the hot air due to the cooling of the battery 410 is discharged to the outside of the unmanned aerial vehicle 100.

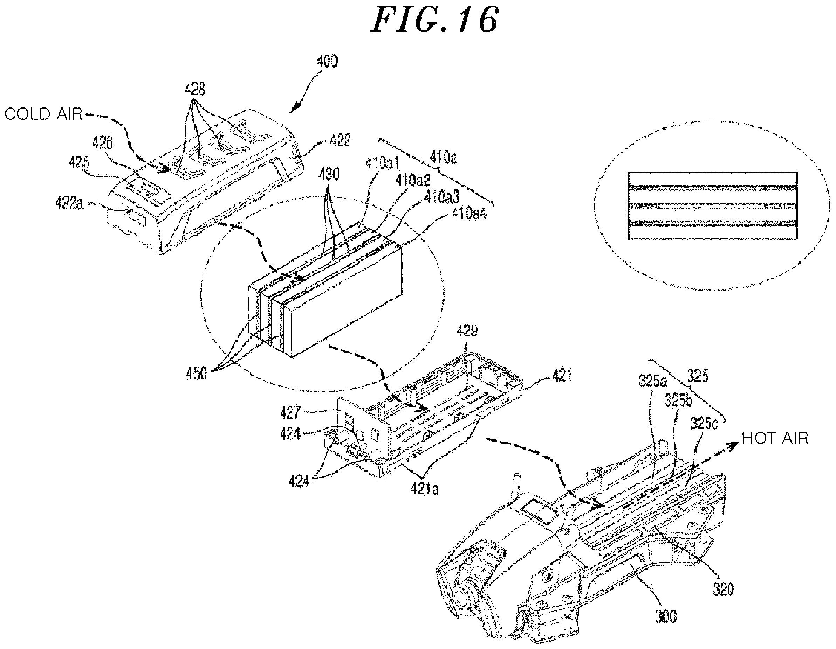

The structure of the unmanned aerial vehicle 100 that may effectively solve the heat problem of the battery 410 as described in FIG. 15 is described below with reference to FIG. 16.

FIG. 16 illustrates a structure of the battery unit 400 and the main body 300 capable of effectively cooling the heat of the battery 410 of the unmanned aerial vehicle 100 according to an embodiment.

Referring to FIG. 16, the case housing 422 forming the battery case 420 may include one or more air inlet holes 428 in a surface that is exposed to the outside when the battery case 420 is coupled to the main body 300 of the unmanned aerial vehicle 100. Cold air coming in a front direction of the unmanned aerial vehicle 100 may flow in through the air inlet hole 428 during the flight of the unmanned aerial vehicle 100.

According to an embodiment, the battery 410a may include two or more battery cells and a ventilation slit may be provided between the battery cells. Referring to FIG. 16, the battery 410a may include four battery cells 410a1, 410a2, 410a3, and 410a4, and an adhesive member 450 may be provided at an end portion between the battery cells. In general, in order to make a battery pack as thin as possible, an adhesive member adhering the battery cells constituting a battery pack is formed as thin as possible. In the present inventive concept, however, the adhesive member is intentionally formed to be relatively thick and thus a slit may be formed between the battery cells. Accordingly, a portion other than a portion filled with the adhesive member 450 between the battery cells may form the ventilation slit 430. The air passing through the air inlet holes 428 provided in the case housing 422 may pass through the ventilation slit 430 of the battery 410a.

The air passing through the ventilation slit 430 may cool the heat radiated from the battery cell.

According to an embodiment, the case bottom 421 may include one or more ventilation holes 429. Accordingly, the air passing through the ventilation slit 430 of the battery 410a may pass through the ventilation holes 429 of the case bottom 421.

According to an embodiment, one or more ventilation manifolds 325 may be provided on a surface contacting the battery unit 400 in the battery detachable bracket 320 forming the main body 300.

The ventilation manifolds 325 may include one or more passes 325A, 325B, and 325c through which the air passing through the ventilation holes 429 of the case bottom 421 is discharged to the outside.

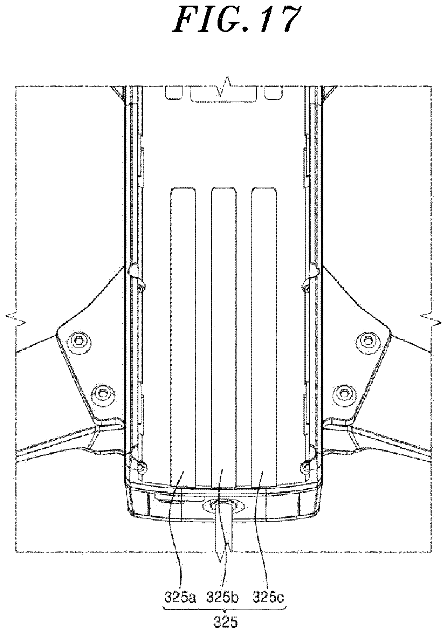

FIG. 17 illustrates the battery detachable bracket 320 having the ventilation manifold 325 installed thereon. Although FIG. 17 illustrates that the ventilation manifold 325 includes three passes 325a, 325b, and 325c, the present disclosure is not limited thereto, and various numbers of passes may be provided. When the passes of the ventilation manifold 325 match the array of the ventilation holes 429 of the case bottom 421, cooling effect may be further enhanced.

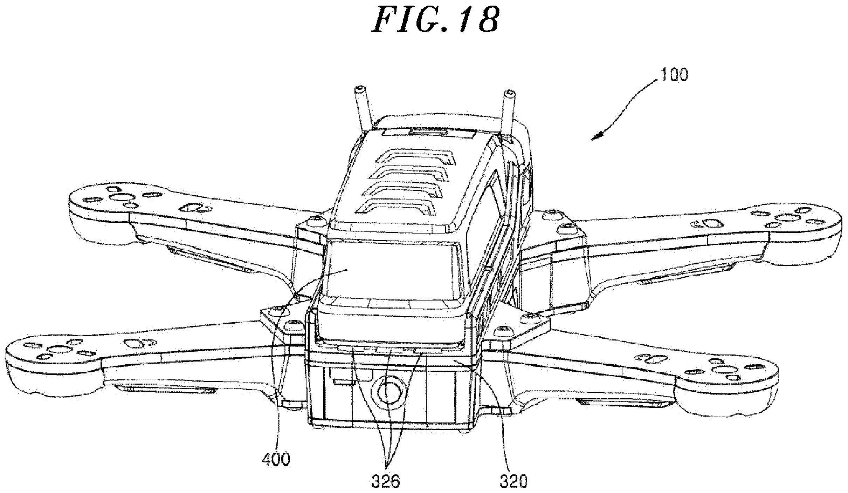

FIG. 18 illustrates a rear side of the main body 300 of the unmanned aerial vehicle 100 to which the battery unit 400 is coupled. Referring to FIG. 18, an air outlet hole 326 may be formed between the battery unit 400 and the battery detachable bracket 320 by the ventilation manifold 325 provided in the battery detachable bracket 320.

As such, as the air passing through the air inlet hole 428 of the case housing 422 of the battery unit 400 is discharge to the outside of the unmanned aerial vehicle 100 via the ventilation slit 430 of the battery 410a, the ventilation holes 429 of the case bottom 421, and the ventilation manifold 325 of the battery detachable bracket 320, the heat of the battery 410 may be effectively cooled.

In the above descriptions, the present inventive concept has been particularly shown and described with reference to embodiments thereof.

However, it will be understood by those skilled in the art that various changes in form and details may be made therein without departing from the scope of the inventive concept as defined by the appended claims. The embodiments should be considered in descriptive sense only and not for purposes of limitation. Therefore, the scope of the inventive concept is defined not by the detailed description of the inventive concept but by the appended claims.

## Claims

1. An unmanned aerial vehicle (100) comprising:
a plurality of arm units (200a-d), each of the plurality of arm units (200a-d) comprising a rotary wing (220), a motor (230), and an arm main body (210) and detachably coupled to a main body (300) of the unmanned aerial vehicle (100);
the main body (300) of the unmanned aerial vehicle (100) comprising a plurality of receptacles (310) for coupling to the plurality of arm units (200a-d); and
a battery unit (400) coupled to the main body (300) of the unmanned aerial vehicle (100) to be exposed to outside wherein at least a part of the battery unit (400) is exposed to outside when the battery unit (400) is coupled to the main body (300) of the unmanned aerial vehicle (100),
wherein the battery unit (400) is detachably coupled to the main body (300) of the unmanned aerial vehicle (100), and
wherein the battery unit (400) comprises a battery (410) and a battery case (420) accommodating the battery (410), and
wherein the unmanned aerial vehicle (100) further comprises a clamping structure to detachably clamp the main body (300) of the unmanned aerial vehicle (100) and the battery unit (400) to each other; **characterized in that**
the main body (300) of the unmanned aerial vehicle (100) comprises a lower frame (350);
wherein a main control member (340) is firmly installed on an upper portion of lower frame (350), and the main control member (340) is configured to receive a signal transmitted from an external controlling device and controlling the unmanned aerial vehicle (100); and
wherein each of the plurality of arm units (200a-d) comprises a motor control member (213) in the arm main body (210) configured to receive a control signal from the main control member (340) and to control a speed of the motor (230), the arm units (200a-d) configured to be detachable from the main control member (340), and wherein the receptacles (310) are provided at edge parts of the main control member (340), and
wherein the arm main body (210) comprises a plug terminal (P) adapted to be inserted into each of the receptacles (310) of the main control member (340); and an arm lower cover (211) having a connector installed thereon and adapted to transceive a signal with respect to the main body (300) of the unmanned aerial vehicle (100) and to transfer the signal to the motor control member (340).

2. The unmanned aerial vehicle (100) of claim 1, wherein the arm main body (210) comprises:
an arm lower cover (211) transceiving a signal with respect to the main body (300), having a connector (215) installed thereon, and transferring the signal to a motor control member (213);
the motor control member (213) installed on the arm lower cover (211) and controlling a speed of the motor (230); and
an arm upper cover (214) coupled to the arm lower cover (211) where the motor control member (213) is installed, wherein the motor (230) and the rotary wing (220) are installed on the arm upper cover (214).

3. The unmanned aerial vehicle (100) of claim 2, wherein the arm upper cover (214) is formed of a material having heat conductivity suitable for heat dissipation of the motor control member (213).

4. The unmanned aerial vehicle (100) of claim 1, wherein the battery case (420) comprises a clamping slot, the main body (300) comprises a clamping bar coupled to the clamping slot, and when the main body (300) and the battery case (420) are coupled to each other, the clamping slot and the clamping bar are coupled to each other.

5. The unmanned aerial vehicle (100) of claim 1, wherein the unmanned aerial vehicle (100) comprises an input button (1100) adapted to receive a user input to pair a remote control device for controlling the unmanned aerial vehicle (100) and the unmanned aerial vehicle (100) that receives a control command from the remote control device.

6. The unmanned aerial vehicle (100) of claim 1, wherein a camera installation member for installing a camera is provided on the main body (300) of the unmanned aerial vehicle (100), and
the camera installation member comprises a plurality of holes to adjust an installation angle of the camera.

7. The unmanned aerial vehicle (100) of claim 1, wherein the battery case (420) has at least one air inlet hole (428) in the part exposed to the outside

8. The unmanned aerial vehicle (100) of claim 7, wherein the batter (410) comprises two or more battery cells (410a), and a ventilation slit (430) is provided between the battery cells (410a) to pass air coming through the at least one air inlet hole (428) provided in the battery case (420).

9. The unmanned aerial vehicle (100) of claim 8, wherein the battery case (420) comprises:
a case housing (422) having the at least one air inlet hole (428); and
a case bottom (421) having at least one ventilation hole (429) for discharging the air passing through the at least one air inlet hole (428) and the ventilation slit (430) of the battery to outside of the battery case (420).

10. The unmanned aerial vehicle (100) of claim 9, wherein the ventilation hole (429) is provided in plural numbers, and
each of the ventilation holes is provided in a bottom of the battery case (420) corresponding to an arrangement of the ventilation slit (430).

11. The unmanned aerial vehicle (100) of claim 9, wherein a ventilation manifold (325) having one or more paths, through which air passing through the ventilation hole (429) provided in the case bottom (421) is discharged to outside of the unmanned aerial vehicle (100), is provided on a surface of the main body (300) contacting the case bottom (421) when the battery unit (400) is coupled to the main body (300).

12. The unmanned aerial vehicle (100) of claim 11, wherein the main body (300) further comprises a battery detachable bracket (320) comprising the ventilation manifold (325).

## Patentansprüche

1. Unbemanntes Luftfahrzeug (100) umfassend:
eine Vielzahl von Armeinheiten (200a-d), wobei jede der Vielzahl von Armeinheiten (200a-d) einen Drehflügel (220), einen Motor (230) und einen Armhauptkörper (210) umfasst und mit einem Hauptkörper (300) des unbemannten Luftfahrzeugs (100) lösbar gekoppelt ist;
den Hauptkörper (300) des unbemannten Luftfahrzeugs (100), der eine Vielzahl von Aufnahmeeinrichtungen (310) zum Koppeln mit der Vielzahl von Armeinheiten (200a-d) umfasst; und
eine Batterieeinheit (400), die mit dem Hauptkörper (300) des unbemannten Luftfahrzeugs (100) gekoppelt ist, um zur Außenseite exponiert zu sein,
wobei wenigstens ein Teil der Batterieeinheit (400) zur Außenseite exponiert ist, wenn die Batterieeinheit (400) mit dem Hauptkörper (300) des unbemannten Luftfahrzeugs (100) gekoppelt ist,
wobei die Batterieeinheit (400) mit dem Hauptkörper (300) des unbemannten Luftfahrzeugs (100) lösbar gekoppelt ist, und
wobei die Batterieeinheit (400) eine Batterie (410) und ein die Batterie (410) unterbringendes Batteriegehäuse (420) umfasst, und
wobei das unbemannte Luftfahrzeug (100) ferner eine Klemmstruktur umfasst, um den Hauptkörper (300) des unbemannten Luftfahrzeugs (100) und die Batterieeinheit (400) lösbar aneinander zu klemmen;
**dadurch gekennzeichnet, dass**
der Hauptkörper (300) des unbemannten Luftfahrzeugs (100) einen unteren Rahmen (350) umfasst;
wobei ein Hauptsteuerelement (340) an einem oberen Abschnitt des unteren Rahmens fest installiert ist und das Hauptsteuerelement (340) dazu konfiguriert ist, ein Signal zu empfangen, das von einer externen Steuervorrichtung übertragen wurde und das unbemannte Fahrzeug (100) steuert; und
wobei jede der Vielzahl von Armeinheiten (200a-d) ein Motorsteuerelement (213) in dem Armhauptkörper (210) umfasst, das dazu konfiguriert ist, ein Steuersignal von dem Hauptsteuerelement (340) zu empfangen und eine Geschwindigkeit des Motors (230) zu steuern, wobei die Armeinheiten (200a-d) dazu konfiguriert sind, von dem Hauptsteuerelement (340) lösbar zu sein, und wobei die Aufnahmeeinrichtungen (310) an Kantenteilen des Hauptsteuerelements (340) vorgesehen sind, und
wobei der Armhauptkörper (210) einen Steckeranschluss (P), der daran angepasst ist, in jede der Aufnahmeeinrichtungen (310) des Hauptsteuerelements (340) eingefügt zu werden; und eine untere Armabdeckung (211) umfasst, die einen daran installierten Verbinder aufweist, der daran angepasst ist, ein Signal in Bezug auf den Hauptkörper (300) des unbemannten Luftfahrzeugs (100) zu senden und zu empfangen und das Signal zu dem Motorsteuerelement (340) zu transferieren.

2. Unbemanntes Luftfahrzeug (100) nach Anspruch 1, wobei der Armhauptkörper (210) umfasst:
eine untere Armabdeckung (211), die ein Signal in Bezug auf den Hauptkörper (300) sendet und empfängt, die einen daran installierten Verbinder (215) aufweist, und das Signal zu einem Motorsteuerelement (213) transferiert;
das Motorsteuerelement (213), das an der unteren Armabdeckung (211) installiert ist und eine Geschwindigkeit des Motors (230) steuert; und
eine obere Armabdeckung (214), die mit der unteren Armabdeckung (211) gekoppelt ist, wo das Motorsteuerelement (213) installiert ist, wobei der Motor (230) und der Drehflügel (220) an der oberen Armabdeckung (214) installiert sind.

3. Unbemanntes Luftfahrzeug (100) nach Anspruch 2, wobei die obere Armabdeckung (214) aus einem Material gebildet ist, das eine Wärmeleitfähigkeit aufweist, die zur Wärmeabfuhr des Motorsteuerelements (213) geeignet ist.

4. Unbemanntes Luftfahrzeug (100) nach Anspruch 1, wobei das Batteriegehäuse (420) einen Klemmschlitz umfasst, der Hauptkörper (300) eine mit dem Klemmschlitz gekoppelte Klemmleiste umfasst, und, wenn der Hauptkörper (300) und das Batteriegehäuse (420) miteinander gekoppelt sind, der Klemmschlitz und die Klemmleiste miteinander gekoppelt sind.

5. Unbemanntes Luftfahrzeug (100) nach Anspruch 1, wobei das unbemannte Luftfahrzeug (100) eine Eingabetaste (1100) umfasst, die daran angepasst ist, eine Benutzereingabe zu empfangen, um eine Fernsteuerungsvorrichtung zum Steuern des unbemannten Luftfahrzeugs (100) und das unbemannte Luftfahrzeug (100), das einen Steuerbefehl von der Fernsteuerungsvorrichtung empfängt, zu pairen.

6. Unbemanntes Luftfahrzeug (100) nach Anspruch 1, wobei ein Kamerainstallationselement zum Installieren einer Kamera an dem Hauptkörper (300) des unbemannten Luftfahrzeugs (100) vorgesehen ist, und
das Kamerainstallationselement eine Vielzahl von Löchern umfasst, um einen Installationswinkel der Kamera anzupassen.

7. Unbemanntes Luftfahrzeug (100) nach Anspruch 1, wobei das Batteriegehäuse (420) wenigstens ein Lufteinlassloch (428) in dem zur Außenseite exponierten Teil aufweist.

8. Unbemanntes Luftfahrzeug (100) nach Anspruch 7, wobei die Batterie (410) zwei oder mehr Batteriezellen (410a) umfasst, und ein Ventilationsschlitz (430) zwischen den Batteriezellen (410a) vorgesehen ist, um Luft hindurchgehen zu lassen, die durch das wenigstens eine in dem Batteriegehäuse (420) vorgesehene Lufteinlassloch (428) kommt.

9. Unbemanntes Luftfahrzeug (100) nach Anspruch 8, wobei das Batteriegehäuse (420) umfasst:
eine Gehäuseeinhausung (422), welche das wenigstens eine Lufteinlassloch (428) aufweist; und
einen Gehäuseboden (421), welcher wenigstens ein Ventilationsloch (429) zum Abführen der Luft, die durch das wenigstens eine Lufteinlassloch (428) und den Ventilationsschlitz (430) der Batterie hindurchgeht, zur Außenseite des Batteriegehäuses (420) aufweist.

10. Unbemanntes Luftfahrzeug (100) nach Anspruch 9, wobei das Ventilationsloch (429) in einer Mehrzahl vorgesehen ist; und
jedes der Ventilationslöcher in einem Boden des Batteriegehäuses (420) entsprechend einer Anordnung des Ventilationsschlitzes (430) vorgesehen ist.

11. Unbemanntes Luftfahrzeug (100) nach Anspruch 9, wobei ein Ventilationssammler (325), der einen oder mehrere Pfade aufweist, durch welche Luft, die durch das in dem Gehäuseboden (421) vorgesehene Ventilationsloch (429) hindurchgeht, zur Außenseite des unbemannten Luftfahrzeugs (100) abgeführt wird, an einer Oberfläche des Hauptkörpers (300) vorgesehen ist, die den Gehäuseboden (421) kontaktiert, wenn die Batterieeinheit (400) mit dem Hauptkörper (300) gekoppelt ist.

12. Unbemanntes Luftfahrzeug (100) nach Anspruch 11, wobei der Hauptkörper (300) ferner eine von der Batterie lösbare Halterung (320) umfasst, die den Ventilationssammler (325) umfasst.

## Revendications

1. Véhicule aérien sans pilote (100) comprenant :
une pluralité d'unités de bras (200a-d), chacune de la pluralité d'unités de bras (200a-d) comprenant une voilure tournante (220), un moteur (230) et un corps principal de bras (210) et étant couplée de manière amovible à un corps principal (300) du véhicule aérien sans pilote (100) ;
le corps principal (300) du véhicule aérien sans pilote (100) comprenant une pluralité de réceptacles (310) pour couplage à la pluralité d'unités de bras (200a-d) ; et
une unité de batterie (400) couplée au corps principal (300) du véhicule aérien sans pilote (100) pour être exposée à l'extérieur,
dans lequel au moins une partie de l'unité de batterie (400) est exposée à l'extérieur lorsque l'unité de batterie (400) est couplée au corps principal (300) du véhicule aérien sans pilote (100),
dans lequel l'unité de batterie (400) est couplée de manière amovible au corps principal (300) du véhicule aérien sans pilote (100), et
dans lequel l'unité de batterie (400) comprend une batterie (410) et un carter de batterie (420) logeant la batterie (410), et
dans lequel le véhicule aérien sans pilote (100) comprend en outre une structure de serrage pour serrer de manière amovible le corps principal (300) du véhicule aérien sans pilote (100) et l'unité de batterie (400) l'une avec l'autre ; **caractérisé en ce que**
le corps principal (300) du véhicule aérien sans pilote (100) comprend un châssis inférieur (350) ;
dans lequel un élément de commande principal (340) est solidement installé sur une portion supérieure du châssis inférieur (350), et l'élément de commande principal (340) est configuré pour recevoir un signal transmis depuis un dispositif de commande externe et commander le véhicule aérien sans pilote (100) ; et
dans lequel chacune de la pluralité d'unités de bras (200ad) comprend un élément de commande de moteur (213) dans le corps principal de bras (210) configuré pour recevoir un signal de commande provenant de l'élément de commande principal (340) et pour commander une vitesse du moteur (230), les unités de bras (200a-d) étant configurées pour pouvoir être détachées de l'élément de commande principal (340), et dans lequel les réceptacles (310) sont disposés au niveau de parties de bord de l'élément de commande principal (340), et
dans lequel le corps principal de bras (210) comprend un terminal de branchement (P) adapté pour être inséré dans chacun des réceptacles (310) de l'élément de commande principal (340) ; et un couvercle inférieur de bras (211) possédant un connecteur installé sur celui-ci et adapté pour émettre-recevoir un signal par rapport au corps principal (300) du véhicule aérien sans pilote (100) et pour transférer le signal à l'élément de commande de moteur (340).

2. Véhicule aérien sans pilote (100) selon la revendication 1, dans lequel le corps principal de bras (210) comprend :
un couvercle inférieur de bras (211) émettant-recevant un signal par rapport au corps principal (300), possédant un connecteur (215) installé sur celui-ci, et transférant le signal à un élément de commande de moteur (213) ;
l'élément de commande de moteur (213) installé sur le couvercle inférieur de bras (211) et commandant une vitesse du moteur (230) ; et
un couvercle supérieur de bras (214) couplé au couvercle inférieur de bras (211) où l'élément de commande de moteur (213) est installé, dans lequel le moteur (230) et la voilure rotative (220) sont installés sur le couvercle supérieur de bras (214).

3. Véhicule aérien sans pilote (100) selon la revendication 2, dans lequel le couvercle supérieur de bras (214) est formé d'un matériau présentant une conductibilité de chaleur appropriée pour la dissipation de chaleur de l'élément de commande de moteur (213).

4. Véhicule aérien sans pilote (100) selon la revendication 1, dans lequel le carter de batterie (420) comprend une fente de serrage, le corps principal (300) comprend une barre de serrage couplée à la fente de serrage, et lorsque le corps principal (300) et le carter de batterie (420) sont couplés l'un à l'autre, la fente de serrage et la barre de serrage sont couplées l'une à l'autre.

5. Véhicule aérien sans pilote (100) selon la revendication 1, dans lequel le véhicule aérien sans pilote (100) comprend un bouton d'entrée (1100) adapté pour recevoir une entrée utilisateur pour apparier un dispositif de commande à distance pour commander le véhicule aérien sans pilote (100) et le véhicule aérien sans pilote (100) qui reçoit une instruction de commande en provenance du dispositif de commande à distance.

6. Véhicule aérien sans pilote (100) selon la revendication 1, dans lequel un élément d'installation de caméra destiné à installer une caméra est disposé sur le corps principal (300) du véhicule aérien sans pilote (100), et
l'élément d'installation de caméra comprend une pluralité de trous pour régler un angle d'installation de la caméra.

7. Véhicule aérien sans pilote (100) selon la revendication 1, dans lequel le carter de batterie (420) possède au moins un trou d'entrée d'air (428) dans la partie exposée à l'extérieur.

8. Véhicule aérien sans pilote (100) selon la revendication 7, dans lequel la batterie (410) comprend deux cellules de batterie (410a) ou plus, et une entaille de ventilation (430) est disposée entre les cellules de batterie (410a) pour faire passer l'air provenant de l'au moins un trou d'entrée d'air (428) disposé dans le carter de batterie (420).

9. Véhicule aérien sans pilote (100) selon la revendication 8, dans lequel le carter de batterie (420) comprend :
un boîtier de carter (422) possédant l'au moins un trou d'entrée d'air (428) ; et
un fond de carter (421) possédant au moins un trou de ventilation (429) pour évacuer l'air passant à travers l'au moins un trou d'entrée d'air (428) et la fente de ventilation (430) de la batterie à l'extérieur du carter de batterie (420).

10. Véhicule aérien sans pilote (100) selon la revendication 9, dans lequel le trou de ventilation (429) est présent en plusieurs exemplaires, et
chacun des trous de ventilation est disposé dans un fond du carter de batterie (420) correspondant à un agencement de la fente de ventilation (430).

11. Véhicule aérien sans pilote (100) selon la revendication 9, dans lequel un collecteur de ventilation (325) possédant un ou plusieurs chemins, par lesquels l'air traversant le trou de ventilation (429) situé dans le fond de carter (421) est évacué à l'extérieur du véhicule aérien sans pilote (100), est disposé sur une surface du corps principal (300) en contact avec le fond de carter (421) lorsque l'unité de batterie (400) est couplée au corps principal (300).

12. Véhicule aérien sans pilote (100) selon la revendication 11, dans lequel le corps principal (300) comprend en outre un support amovible (320) de batterie comprenant le collecteur de ventilation (325).
